# DEMANDE DE BREVET EUROPEEN

(11) **EP 3 354 769 A1**
(43) Date de publication de la demande: **01.08.2018**
(21) Numéro de dépôt: 18153781.2
(22) Date de dépôt: 27.01.2018
(51) Int. Cl.: C23C 24/10, B22F 3/22, B22F 3/105, B33Y 80/00, B22F 3/24, B22F 3/26, B22F 5/00, B33Y 10/00

(54) **PROCÉDÉ DE FABRICATION DE PIÈCES RÉALISÉES EN METALLURGIE DES POUDRES COMPORTANT L'APPLICATION D'UN REVÊTEMENT**

(30) Priorité: 30.01.2017 FR 1750709
(71) Demandeur: SAFRAN AIRCRAFT ENGINES, 75015 Paris (FR)
(72) Inventeur: KNITTEL, Stéphane, 77550 MOISSY CRAMAYEL (FR); BAYARD, Philippe, 77550 MOISSY-CRAMAYEL (FR); COLAS, Cédric, Pierre, Jacques, 77550 MOISSY-CRAMAYEL (FR)
(74) Mandataire: Gevers & Orès

(57) **Abrégé**

Procédé de fabrication d'une pièce de turbomachine, ledit procédé comportant une étape (101) de réalisation de ladite pièce par métallurgie des poudres avec un matériau formant le substrat de ladite pièce, puis une finition comprenant au moins une première étape (103) dans laquelle un matériau déterminé est déposé sur au moins une surface (S1) du substrat de ladite pièce après l'étape (101) de réalisation par métallurgie des poudres et une deuxième étape (104) correspondant à un traitement thermique, de manière à former un revêtement lisse de ladite surface (S1), caractérisé en ce que ledit matériau déterminé est un matériau métallique, de manière à former un revêtement métallique.

## Description

### DOMAINE TECHNIQUE

Le domaine de la présente invention est celui de la fabrication des pièces métalliques et plus particulièrement celui du traitement de finition pour l'obtention d'un bon état de surface sur des pièces réalisées par métallurgie des poudres.

### ETAT DE L'ART

L'état de la technique comprend les demandes de brevet publiées sous les numéros US-A1-2015/060403, US-A1-2013/071562, FR-A1-3 028 436 et FR-A1-2 994 397, ainsi que le brevet publié sous le numéro US-B2-6 409 795.

La réalisation de pièces par métallurgie des poudres présente un intérêt économique certain en termes de cadence de production, réduction des temps des étapes d'usinage et de coût de réalisation.

Les procédés de fabrication par métallurgie des poudres comprennent en particulier des procédés de fabrication additive ou fabrication directe, tels que la fusion par frittage laser, le moulage par injection de poudre ou la fusion par faisceau d'électrons, par exemple. Ces procédés ont l'avantage de pouvoir produire des pièces métalliques avec une géométrie proche de la géométrie finale de la pièce à partir de poudres métalliques.

Cependant, les états de surface en sortie de procédé ne permettent pas l'emploi direct des pièces. En effet, des états de surface présentant des niveaux de rugosité élevés et irréguliers sont généralement obtenus selon le mode d'élaboration, les paramètres et l'orientation de construction et la nature des poudres utilisées (taille des grains, distribution granulométrique et composition chimique). Ces états de surface s'avèrent incompatibles avec les exigences des bureaux d'étude en termes de rugosité (impact sur les performances aérodynamiques dans les zones de passage de flux), mais également d'abattements mécaniques (pièces soumises à des contraintes vibratoires en service) liés à ces états de surface dégradés.

De plus, les surfaces des pièces produites en fabrication additive sont généralement polluées (oxydes, grains de poudre de faible adhérence) ou présentent des défauts métallurgiques pouvant affecter la microstructure de la pièce sur des épaisseurs comprises généralement entre 50 et 200 µm.

Des techniques existent qui permettent d'améliorer les états de surface des pièces produites par fabrication additive en retirant de la matière en surface des pièces de manière à obtenir des surfaces compatibles avec les exigences imposées par les bureaux d'étude. Ces procédés peuvent être d'ordre mécanique (procédé de modification des états de surface par usinage, ou tribofinition) ou d'ordre chimique (usinage chimique ou électrochimique) ou, encore, être une combinaison de procédés appartenant aux deux précédentes familles. Pour les pièces à géométries complexes, ces procédés peuvent connaître des limitations en termes d'efficacité et d'accessibilité.

Une autre famille de procédés peut, comme décrit dans le document FR-B1-2978687 du déposant, comprendre la fabrication d'une pièce par métallurgie des poudres avec une sous-épaisseur, suivie d'une opération de finition avec le dépôt d'un revêtement en peinture époxy pour former un film permettant d'obtenir le positionnement recherché de la surface de la pièce. Le dépôt de peinture époxy est plus facile à réaliser et permet de réaliser de bons états de surface en sortie de fabrication. Par contre, ce procédé présente l'inconvénient que le revêtement n'a pas les mêmes qualités de résistance mécanique, thermique et chimique que le substrat de la pièce obtenue par métallurgie des poudres. Il est plutôt réservé à des pièces de prototypage mais il n'a pas forcément les caractéristiques permettant de réaliser une pièce destinée à fonctionner dans un usage opérationnel. En effet, l'application d'une couche de peinture organique de type époxy peut permettre de lisser la surface, voire d'apporter une certaine résistance à la corrosion au substrat. En revanche, l'utilisation reste limitée à 150/200°C maximum. De plus, dans les zones de passage de flux, les peintures organiques à base de résine époxy ont un comportement médiocre en érosion.

La présente invention a pour but de remédier à ces inconvénients en proposant un procédé de réalisation de pièces à construction rapide à partir de poudres métalliques, qui ne présente pas certains des inconvénients de l'art antérieur et qui, en particulier, permette d'obtenir des états de surface de grande qualité et une protection efficace de la pièce lors de son utilisation.

### EXPOSE DE L'INVENTION

A cet effet, l'invention a pour objet un procédé de fabrication d'une pièce de turbomachine, ledit procédé comportant une étape de réalisation de ladite pièce par métallurgie des poudres avec un matériau formant un substrat de ladite pièce, puis une finition comprenant au moins une première étape dans laquelle un matériau déterminé est déposé sur au moins une surface du substrat de ladite pièce après l'étape de réalisation par métallurgie des poudres et une deuxième étape correspondant à un premier traitement thermique, de manière à former un revêtement lisse de ladite surface, caractérisé en ce que ledit matériau déterminé est un matériau métallique de manière à former un revêtement métallique lisse.

L'utilisation d'un matériau métallique permet de former un revêtement métallique conférant à la pièce une topographie de surface améliorée en comparaison à une pièce sans traitement et une résistance mécanique accrue due à ladite amélioration de la topographie de surface (meilleure résistance vibratoire par exemple).

De préférence, ledit matériau métallique est déposé sous forme de poudre lors de ladite première étape de finition.

Avantageusement, un agent liant ou adhésif est utilisé lors de ladite première étape de finition, de manière à favoriser l'adhésion du matériau métallique en poudre sur ladite surface du substrat.

Avantageusement, le matériau du substrat étant un métal ou un alliage métallique déterminé, ledit matériau métallique en poudre comporte au moins un premier ensemble de grains composés d'un premier métal ou d'un premier alliage de même nature que le matériau du substrat. Cela permet d'obtenir une continuité métallurgique entre le substrat et le revêtement, permettant ainsi d'obtenir des propriétés équivalentes entre le substrat et le revêtement, favorisant l'efficacité opérationnelle de la pièce.

De préférence, le traitement thermique de ladite deuxième étape de finition est réalisé de manière à faire fondre au moins un ensemble de grains de même nature dans ledit matériau métallique en poudre.

Avantageusement, le premier ensemble de grains est différent de l'ensemble de grains fondus dans ladite deuxième étape de finition.

Avantageusement, ladite surface du substrat ayant une rugosité déterminée, ledit premier ensemble de grains a une granulométrie de taille inférieure à ladite rugosité, de préférence inférieure à 53 µm, de manière à former des gouttes de matériau liquide remplissant correctement la rugosité de la surface du substrat lors de ladite deuxième étape de finition.

De préférence, le procédé comporte une étape de nettoyage de ladite surface du substrat avant ladite première étape de finition, de manière à favoriser l'adhésion au substrat dudit matériau métallique.

Dans un premier mode de réalisation du procédé, ladite première étape de finition comporte au moins une phase de dépôt d'un agent adhésif sur ladite surface du substrat préalablement à une phase d'application de la poudre dudit matériau métallique sur ladite surface, de manière à ce que la poudre adhère à ladite surface.

Dans un deuxième mode de réalisation du procédé, ladite première étape de finition comporte une phase de réalisation d'une barbotine avec la poudre dudit matériau métallique, à l'aide au moins d'un agent liant et d'un solvant, et une phase d'application de ladite barbotine sur ladite surface du substrat, de manière à ce que le dépôt de poudre atteigne l'épaisseur voulue pour former le revêtement.

Avantageusement, après la phase d'application de ladite barbotine sur ladite surface du substrat, la finition comprend une étape d'étuvage, de manière à consolider le dépôt de poudre.

De préférence, la finition comprend un deuxième traitement thermique, de manière à homogénéiser l'épaisseur du revêtement de ladite surface.

Avantageusement, le deuxième traitement thermique comprend une phase de brasage et une phase de diffusion.

De préférence, la finition comprend une étape de traitement mécanique ou chimique du revêtement de ladite surface.

### DESCRIPTION DES FIGURES

L'invention sera mieux comprise, et d'autres buts, détails, caractéristiques et avantages de celle-ci apparaîtront plus clairement au cours de la description explicative détaillée qui va suivre, de modes de réalisation de l'invention donnés à titre d'exemples purement illustratif et non limitatif, en référence aux dessins schématiques annexés.

Sur ces dessins :
- la figure 1 est une vue schématique en coupe de la surface d'une pièce réalisée à partir de poudres métalliques, après l'étape de fabrication additive ;
- la figure 2 est une vue schématique en coupe de la surface de la même pièce que la figure 1 après dépôt d'une couche de poudre métallique dans un premier mode de réalisation selon l'invention ;
- la figure 3 est une vue schématique en coupe de la surface de la même pièce que la figure 1 après dépôt d'une couche de poudre métallique avec une barbotine, dans un deuxième mode de réalisation selon l'invention ;
- les figures 4a, 4b et 4c sont des vues schématiques en coupe d'un détail de la surface de la figure 1 sur laquelle sont accrochées des gouttes de différentes tailles de poudre métallique brasée en vue de former une couche comme sur la figure 5 ;
- la figure 5 est une vue schématique en coupe de la surface de la même pièce que la figure 3 après un premier traitement thermique selon l'invention ;
- la figure 6 est une vue schématique en coupe de la surface de la même pièce que la figure 5 après un deuxième traitement thermique selon l'invention ;
- la figure 7 représente le schéma de déroulement d'un premier mode de réalisation du procédé selon l'invention ;
- la figure 8 représente le schéma de déroulement d'un deuxième mode de réalisation du procédé selon l'invention.

### DESCRIPTION DETAILLEE

L'invention concerne la fabrication d'une pièce par métallurgie des poudres par fabrication additive, par exemple la fabrication par laser avec projection de poudre (Additive Laser Manufacturing ou ALM), la fusion sélective par laser (Selective Laser Melting ou SLM), le moulage par injection de métal (Metal Injection Molding ou MIM), le moulage par injection de poudre (Powder Injection Molding ou PIM), la fusion par faisceau d'électrons (Electron Beam Melting ou EBM), etc. Comme cela a été dit précédemment, la fabrication additive permet ainsi de former une pièce avec un matériau métallique formant un substrat dont la surface a une géométrie proche de la forme finale recherchée. Les substrats concernés par l'invention peuvent être :
- du Nickel, du Cobalt, NiCr, CoCr, NiCo, CoNi, CoNiCr, des alliages base nickel, base cobalt ou superalliages base nickel ou superalliages base cobalt ;
- des aciers (martensitiques, austénitiques, fontes, etc.), FeCrAl, etc... ;
- du Titane et des alliages de titane ;
- des matériaux Intermétalliques (TiAl, etc...).

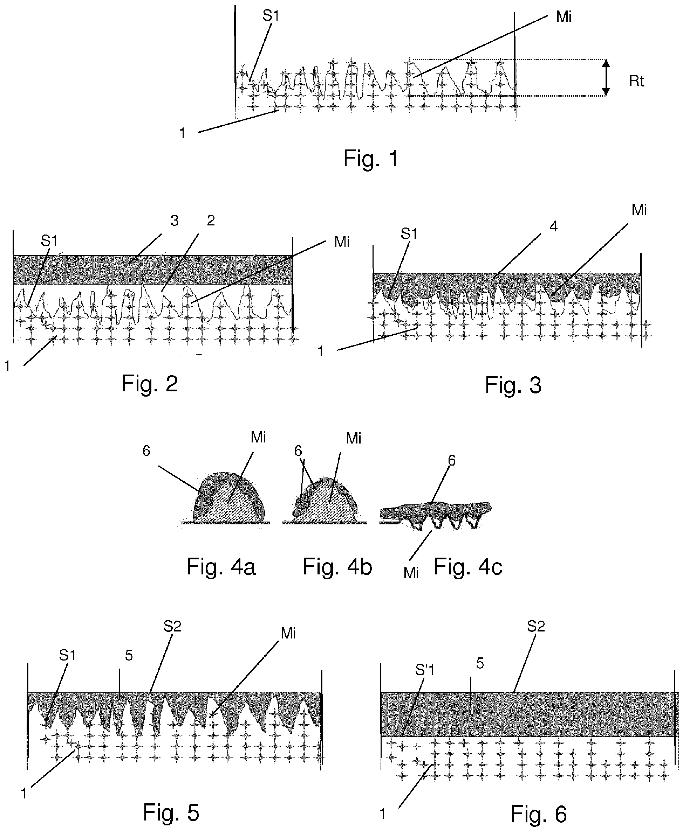

En se référant à la figure 1, on voit en coupe et à très fort grossissement un élément de surface S1 du substrat 1 d'une telle pièce. Cette surface S1 présente un certain nombre de pics et de creux qui s'étendent perpendiculairement à la surface moyenne de la pièce et dont l'amplitude entre le pic le plus haut et le creux le plus profond, qui caractérise la rugosité de la surface, est égal à une valeur dite Rt. Cette rugosité Rt fournit également une dimension caractéristique de la taille des motifs Mi formant les aspérités de la surface S1, typiquement un pic entre des creux.

On va maintenant décrire la suite du procédé selon l'invention, qui permet d'aboutir à des rugosités faibles sur l'élément de surface S1 tout en suivant les formes de la pièce finale. Ce procédé applique sur l'élément de surface S1 un revêtement métallique dont l'épaisseur est généralement comprise entre 25 et 3000 µm, selon que l'on veuille simplement lisser la surface S1 ou aussi rattraper un écart de cotes par rapport à la forme spécifiée pour la pièce.

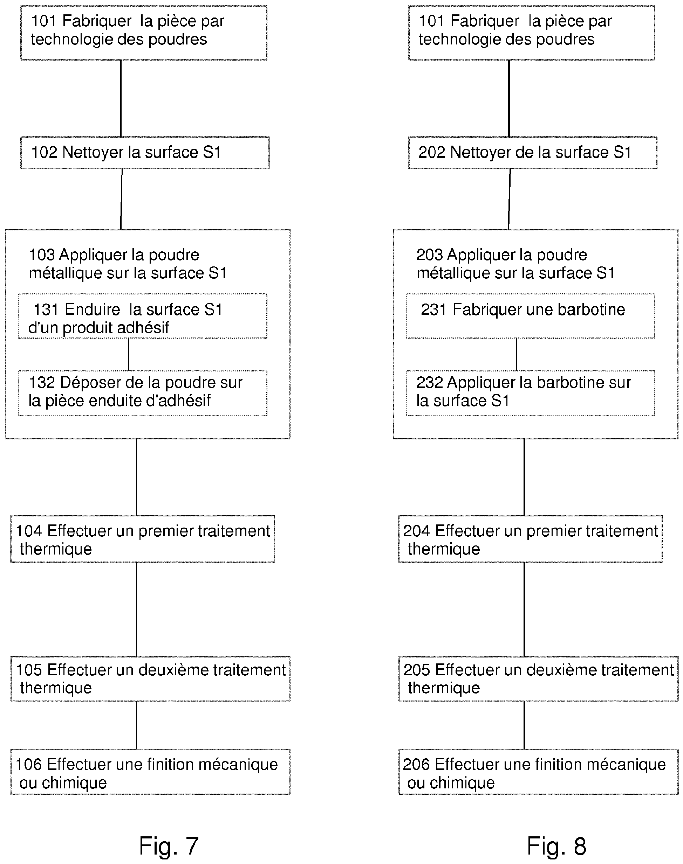

En référence à la figure 7, un premier mode de réalisation du procédé utilise l'application d'un adhésif ou colle sur la surface S1 pour maintenir une poudre métallique ou un mélange de poudres métalliques qui serviront à former le revêtement métallique sur la surface S1.

La poudre ou le mélange de poudre comprend avantageusement une première poudre d'un premier métal, de même nature que celui du substrat 1, ou d'un premier alliage, de même nuance ou d'une nuance proche que l'alliage du substrat 1. Cela permet de former un revêtement ayant les mêmes qualités que le substrat 1 de la pièce et assurer la continuité métallurgique entre la pièce et le revêtement. Ladite première poudre, généralement non fusible lors de traitements thermiques tels que le brasage utilisé dans le procédé, a de préférence une granulométrie fine. La taille des grains est de préférence déterminée en fonction de la dimension caractéristique Rt de la rugosité et de la distance entre les motifs, de manière à ce que les grains de poudre puissent se répartir sur les motifs Mi formant les aspérités de la surface S1. Typiquement la taille des grains est inférieure à 53 µm.

Compte tenu des traitements thermiques faisant partie du procédé selon l'invention, la poudre ou le mélange de poudres comprend de préférence une deuxième poudre d'un deuxième métal, ici fusible, prévue pour le brasage. Avantageusement, la température de solidus du deuxième métal, de brasage, est inférieure aux températures de solidus du premier métal et du substrat 1. Des exemples d'alliages métalliques pouvant être utilisés pour le deuxième métal sont donnés ci-dessous avec leurs températures de fusion. Le tableau ci-dessous comprend en outre des mélanges de premier et deuxième poudres ou métaux ainsi que leurs températures de fusion.

| Type d'alliage (deuxième métal) ou de mélange (premier métal et deuxième métal) | Température de fusion |
|---|---|
| NiCrB1055 | 1100°C |
| NiCoSiB1060 | 1125°C |
| RBD61 (Astroloy 75% et NiCoSiB1060 25%) | 1170-1220°C |
| RBD121 (Astroloy 70% et NiCoSiB1060 30%) | 1170°C - 1220°C |

Avantageusement, le mélange de poudres est placé dans un malaxeur un temps nécessaire à une bonne homogénéisation, avant son utilisation dans les étapes décrites ci-après.

De préférence, le procédé comprend, après l'étape 101 de fabrication additive de la pièce et avant le dépôt de la poudre ou du mélange de poudres métalliques, une étape préalable de nettoyage 102 pour que la surface S1 à traiter soit propre, non grasse et non oxydée. Cette étape de nettoyage 102 comprend avantageusement une gamme de dégraissage et de désoxydation. Il est possible d'y ajouter un nettoyage en phase vapeur de type nettoyage fluoré.

Ensuite, la première étape 103 de réalisation du revêtement métallique, ici l'application d'une couche de poudre métallique sur la surface S1, comporte deux phases.

Une première phase 131 consiste à déposer sur la surface S1 un adhésif tel que de la colle, de la laque à fusains ou de la laque à cheveux, par exemple. Cela peut être réalisé en pulvérisant l'adhésif sous forme de spray ou par tout autre moyen (ex : peinturage ou aspersion, pinceau, brosse, trempé).

Cela est suivi immédiatement par une deuxième phase 132 de dépôt d'une fine couche de la poudre ou du mélange de poudres, sur la surface S1 encollée. Pour, cela, la poudre peut être saupoudrée sur la surface S1 à partir d'un distributeur de poudre de type salière dans lequel elle a été préalablement placée. On répartit ensuite la poudre de façon homogène sur l'intégralité de la zone à traiter avant d'éliminer l'excès non adhérent de façon à avoir une très fine épaisseur de poudre sur la pièce. L'épaisseur de la couche de poudre est comprise entre 30µm et 150µm.

Dans une variante, la deuxième phase 132 peut être réalisée en immergeant la pièce dans un bain de mélange de poudres (type bol de tribofinition), de manière à faire adhérer la poudre en surface de la pièce.

En référence à la figure 2, à la fin de la deuxième phase 132, le mélange 3 de poudres métalliques colle sur une couche d'agent adhésif 2 qui s'accroche lui-même sur la surface S1. L'ensemble peut recouvrir les motifs Mi de la rugosité de la surface S1, l'agent adhésif 2 remplissant les creux entre les motifs Mi et la couche de poudre de ce mélange 3 ne pénétrant pas dans les creux. La surface externe de la poudre ou du mélange de poudres déposé est plus lisse que la surface S1 mais elle n'a pas forcément le poli suffisant et l'ensemble ne forme pas encore un revêtement ayant les propriétés voulues.

Les deux phases 131, 132, de l'étape 103 de dépôt de poudre peuvent être répétées le nombre de fois nécessaire pour que la couche de poudre atteigne une épaisseur déterminée, permettant de réaliser, grâce aux traitements thermiques appliqués dans la suite du procédé, le revêtement métallique avec l'épaisseur souhaitée.

Le procédé comporte ensuite un traitement thermique 104 pour réaliser la diminution de rugosité et obtenir un revêtement lissant la surface S1. Ici, cela consiste en un apport d'énergie à la surface de la couche de poudre métallique, par exemple par traitement thermique en four. L'apport de chaleur peut également être local à l'aide d'un laser, pour faire fondre au moins une partie de la poudre déposée, par exemple les grains de la poudre de brasage, composés du deuxième métal fusible. En référence à la figure 5, on obtient un revêtement métallique 5 qui, d'une part présente une surface externe S2 plus lisse et avec de meilleures propriétés mécaniques, d'autre part épouse la surface S1 du substrat 1, l'agent collant ayant été évacué.

Ce traitement peut être suivi de traitements thermiques 105 de diffusion et d'homogénéisation structurale. En référence à la figure 6, les deuxièmes traitements thermiques 105 peuvent permettre notamment d'homogénéiser l'épaisseur du revêtement métallique 5.

Plus généralement, la pièce peut subir un cycle de brasage-diffusion, afin d'optimiser le lissage de la surface S1 par le revêtement, comme dans l'exemple décrit ci-dessous :
- dégazage entre 400 et 600°C pendant 15 minutes (étape non représentée sur la figure 7),
- homogénéisation à 950°C pendant 15 minutes (étape non représentée sur la figure 7),
- brasage avec une température à choisir entre 960°C et 1220°C pendant 10 à 20 minutes (étape 104 représentée sur la figure 7),
- diffusion avec une température à choisir au-delà de 1100°C pour une durée fonction du couple substrat / revêtement, durant, par exemple, 2heures à 8heures) (étape 105 représentée sur la figure 7).

Un tel cycle de traitement thermique peut être réalisé sous vide, sous atmosphère neutre ou atmosphère réductrice pour limiter les phénomènes d'oxydation.

Pour finaliser l'amélioration de l'état de surface un traitement de finition 106 peut être réalisé. Ce traitement peut être mécanique, par exemple tribofinition, toilage ou sablage léger, ou chimique, par exemple un usinage chimique.

En référence à la figure 8, un deuxième mode de réalisation du procédé utilise, après la fabrication additive 101 de la pièce, l'application d'une barbotine dans laquelle est en suspension une poudre métallique ou un mélange de poudres métalliques qui serviront à former le revêtement métallique sur la surface S1. Ce deuxième mode de réalisation peut être avantageux dans le cas de pièces à géométries complexes où il est nécessaire de couvrir des zones de formes complexes et difficiles d'accès.

Comme dans le premier mode de réalisation, la poudre ou le mélange de poudres métalliques comprend avantageusement une première poudre d'un premier métal de même nature que celui du substrat 1 ou d'un premier alliage de même nuance ou d'une nuance proche que l'alliage du substrat 1.

De même, la poudre ou le mélange de poudres comprend de préférence une deuxième poudre formée d'un deuxième alliage ayant une température de solidus inférieure aux températures de solidus du premier métal ou premier alliage et du substrat 1, en vue de traitements thermiques de type brasage qui sont appliqués dans le procédé. Pour le deuxième mode de réalisation, ledit deuxième alliage est de préférence formé en utilisant un alliage de la même famille que le premier alliage ou le même métal que le premier métal mais en modifiant sa composition par exemple en utilisant des corps tels que Si, B, P ou des métaux précieux tels que Cu, Ag, Au, Pd.

De préférence, le deuxième mode de réalisation comprend aussi, avant le dépôt de la poudre ou du mélange de poudres métalliques, une étape de nettoyage 202 préalable pour que la surface S1 à traiter soit propre, non grasse et non oxydée. Comme dans le précédent mode de réalisation, cette étape de nettoyage 202 peut comprendre une gamme de dégraissage et de désoxydation. Il est possible d'y ajouter un nettoyage en phase vapeur de type nettoyage fluoré. Avantageusement, cette étape 202 s'apparente à une décontamination et peut être réalisée à l'aide d'un décapage chimique de la surface S1 de manière à la désoxyder et à l'activer. A titre d'exemple, pour un substrat 1 en alliage base nickel, un bain de désoxydation contenant un mélange : HNO3 / HCl / HF et FeCl3 peut être employé pour décaper la surface S1. L'étape 102 précitée peut être remplacée par cette étape 202.

Ce nettoyage améliore l'efficacité du procédé en favorisant la bonne mouillabilité des alliages constituant la poudre ou le mélange de poudres sur la surface S1 de substrat 1. En effet, Il est connu qu'un matériau métallique à l'état liquide présente une bonne mouillabilité sur un substrat solide composé du même matériau.

Dans le deuxième mode de réalisation, l'étape 203 de dépôt de la poudre ou du mélange de poudres métalliques commence par une première phase 231, de fabrication d'une barbotine. Cela consiste en la mise en suspension du mélange de poudres métalliques dans une solution ou une pâte, en lui ajoutant un liant et des solvants. Le liant peut être un liant organique aqueux, tel qu'un oxyde de polyéthylène (PEO) ou des matériaux acryliques, ou un liant métallique comme NiCr ou NiCrSi. Les solvants sont généralement des solvants organiques.

Des agents tels qu'un agent mouillant peuvent aussi être ajoutés au mélange pour permettre la bonne adhésion et un meilleur étalement de la barbotine sur l'ensemble de la pièce.

La deuxième phase 232 de l'étape 203 de dépôt consiste en une application de la barbotine sur la surface S1. Cela peut se faire par des méthodes connues, par exemple par aspersion (jet, pistolage), au trempé ou au pinceau.

En référence à la figure 3, à l'issue de l'étape 203, la couche 4 du matériau en barbotine pénètre dans les creux autour des motifs Mi de la surface S1, favorisant son accroche et l'homogénéisation du revêtement lors des étapes ultérieures du processus.

Une étape d'étuvage, non représentée sur la figure 8, peut être réalisée de manière à consolider le dépôt sur la pièce et permettre sa manipulation plus aisée. La durée d'étuvage peut aller de 10min à quelques heures, avec une température comprise entre 50 et 150°C, par exemple.

Dans le deuxième mode de réalisation, le procédé comporte également un traitement thermique 204 pour obtenir, comme représenté sur la figure 5, un revêtement métallique 5 homogène, qui épouse la surface S1 du substrat 1 et qui présente une surface S2 lisse à l'extérieur. Ici, la pièce traitée est placée au four pour réalisation de l'assemblage du revêtement sur la pièce. La température et la durée du traitement d'assemblage du revêtement sur la pièce peuvent varier selon la nature du substrat et du revêtement. Dans tous les cas, la température de traitement doit être supérieure à la température de solidus du deuxième alliage. Des paliers de température intermédiaires, peuvent être réalisés à températures inférieures au traitement final. Ces paliers ont pour but d'évaporer le liant et les solvants contenus dans la barbotine. Typiquement pour l'application du procédé sur un alliage base nickel, les températures de traitement sont comprises entre 800 et 1300°C et les durées de palier de 20 min à 2h.

On notera à ce stade que, pour favoriser une bonne mouillabilité et une bonne adhérence du mélange de poudres, il est nécessaire que les particules métalliques aient une taille compatible avec l'état de surface à recouvrir. Comme indiqué sur la figure 4, cela permet d'obtenir, lors du traitement thermique, des tailles de gouttes 6 de barbotine fondue permettant un bon remplissage de la rugosité lors de la mise en température et la fusion du mélange appliqué en surface de la pièce. On voit sur la figure 4a que les gouttes 6 ont une dimension comparable à la rugosité Rt et donc se répartissent correctement sur les motifs Mi de la surface S1. Par contre, sur la figure 4b, les gouttes 6 sont trop petites et ne forment pas un film homogène, tandis que, sur la figure 4c, des gouttes 6 trop grandes ne mouillent pas les creux entre les motifs Mi. L'utilisation de poudres de fine granulométrie, avec des grains de taille inférieure ou égale à 53 µm permet d'obtenir des tailles de gouttes adéquates. Cette remarque est également valable pour les gouttes de matériau fondu à partir de la poudre collée à la surface S1, lors du traitement thermique 131 du premier mode de réalisation.

Dans le cadre d'une réduction des coûts de mise en oeuvre du procédé, le traitement thermique peut être réalisé en même temps qu'un traitement thermique ayant pour vocation d'obtenir une microstructure particulière pour l'alliage de base (ex: traitement de revenu). Les traitements thermiques peuvent être réalisés sous vide, sous gaz neutre ou encore en atmosphère réductrice (présence de H2 par exemple).

Pour favoriser une bonne adhérence, des traitements thermiques 205 de diffusion et/ou de détentionnement peuvent être réalisés de manière optionnelle à l'issue du traitement d'assemblage initial. En référence à la figure 6, à la suite de cette étape 205, l'interface entre le substrat 1 et le revêtement métallique 5 suit une surface sensiblement lisse S'1.

Comme dans le premier mode de réalisation, un traitement de finition 206 mécanique ou chimique peut être réalisé pour finaliser l'amélioration de l'état de surface.

Les exemples de mise en oeuvre du procédé ont été présentés sur une portion de surface S1 en référence aux structures à petite échelle. Il est évident que le procédé peut être utilisé pour fabriquer une pièce dont une portion de surface déterminée doit être traitée, par exemple pour travailler dans des conditions particulières, voire dont toute la surface doit être traitée.

## Revendications

1. Procédé de fabrication d'une pièce de turbomachine, ledit procédé comportant une étape (101) de réalisation de ladite pièce par métallurgie des poudres avec un matériau formant le substrat de ladite pièce, puis une finition comprenant au moins une première étape (103) dans laquelle un matériau déterminé est déposé sur au moins une surface (S1) du substrat de ladite pièce après l'étape (101) de réalisation par métallurgie des poudres, et une deuxième étape (104) correspondant à un traitement thermique, de manière à former un revêtement lisse de ladite surface (S1), **caractérisé en ce que** ledit matériau déterminé est un matériau métallique, de manière à former un revêtement métallique lisse.

2. Procédé selon la revendication 1, dans lequel ledit matériau métallique est déposé sous forme de poudre lors de ladite première étape (103) de finition.

3. Procédé selon la revendication 2, dans lequel un agent liant ou adhésif est utilisé lors de ladite première étape (103) de finition, de manière à favoriser l'adhésion du matériau métallique en poudre sur ladite surface (S1) du substrat.

4. Procédé selon la revendication 2 ou 3, dans lequel le matériau du substrat est un métal ou un alliage métallique déterminé et dans lequel ledit matériau métallique en poudre comporte au moins un premier ensemble de grains composés d'un premier métal ou d'un premier alliage de même nature que le matériau du substrat.

5. Procédé selon l'une des revendications 2 à 4, dans lequel le traitement thermique de ladite deuxième étape (104) de finition est réalisé de manière à faire fondre au moins un ensemble de grains de même nature dans ledit matériau métallique en poudre.

6. Procédé selon les revendications 4 et 5, dans lequel le premier ensemble de grains est différent de l'ensemble de grains fondus dans ladite deuxième étape (104) de finition.

7. Procédé selon la revendication 6, dans lequel, ladite surface (S1) du substrat ayant une rugosité déterminée (Rt), ledit premier ensemble de grains a une granulométrie de taille inférieure à ladite rugosité, de préférence inférieure ou égale à 53 µm, de manière à former des gouttes de matériau liquide remplissant correctement la rugosité de la surface (S1) du substrat lors de ladite deuxième étape (104) de finition.

8. Procédé selon l'une des revendications 2 à 7, comportant une étape (102) de nettoyage de ladite surface (S1) du substrat avant ladite première étape (103) de finition, de manière à favoriser l'adhésion au substrat dudit matériau métallique.

9. Procédé selon l'une des revendications 2 à 8, dans lequel ladite première étape (103) de finition comporte au moins une phase (131) de dépôt d'un agent adhésif sur ladite surface (S1) du substrat préalablement à une phase (132) d'application de la poudre dudit matériau métallique sur ladite surface (S1), de manière à ce que la poudre adhère à ladite surface (S1).

10. Procédé selon l'une des revendications 2 à 8, dans lequel ladite première étape (203) de finition comporte une phase (231) de réalisation d'une barbotine avec la poudre dudit matériau métallique, à l'aide au moins d'un agent liant et d'un solvant, et une phase (232) d'application de ladite barbotine sur ladite surface (S1) du substrat, de manière à ce que le dépôt de poudre atteigne l'épaisseur voulue pour former le revêtement.

11. Procédé selon la revendication précédente, dans lequel, après la phase (232) d'application de ladite barbotine sur ladite surface (S1) du substrat, la finition comprend une étape d'étuvage, de manière à consolider le dépôt de poudre.

12. Procédé selon l'une des revendications précédentes, dans lequel la finition comprend un deuxième traitement thermique, de manière à homogénéiser l'épaisseur du revêtement de ladite surface.

13. Procédé selon la revendication précédente, dans lequel le deuxième traitement thermique comprend une phase de brasage et une phase de diffusion.

14. Procédé selon l'une des revendications précédentes, dans lequel la finition comprend une étape de traitement mécanique ou chimique du revêtement de ladite surface.
